# EUROPÄISCHE PATENTANMELDUNG

(11) **EP 3 756 457 A1**
(43) Veröffentlichungstag der Anmeldung: **30.12.2020**
(21) Anmeldenummer: 20171858.2
(22) Anmeldetag: 28.04.2020
(51) Int. Cl.: A01K 5/00, G05D 1/00

(54) **FUTTERMISCHWAGEN-STEUERUNGSSYSTEM ZUM BETRIEB EINES FUTTERMISCHWAGENS**

(30) Priorität: 27.06.2019 DE 202019103559 U
(71) Anmelder: Mayer Verwaltungs GmbH & Co. KG, 84529 Tittmoning (DE)
(72) Erfinder: Twickler, Philipp, 83646 Wackersberg (DE); Felber, Johann, 83410 Laufen (DE)
(74) Vertreter: Flach Bauer Stahl Patentanwälte Partnerschaft mbB

(57) **Zusammenfassung**

Ein Futtermischwagen-Steuerungssystem zum Betrieb eines Futtermischwagens (2) weist eine Fernsteuerung zum ferngesteuerten Betrieb des Futtermischwagens (2) auf. Die Fernsteuerung umfasst einen an einem Beladefahrzeug (1) anordenbaren oder angeordneten Sender (9) zum Aussenden von Funksignalen (10) und einen am Futtermischwagen (2) angeordneten Empfänger. Die Fernsteuerung ist derart ausgebildet, dass der Futtermischwagen (2) getrennt vom Beladefahrzeug (1) bewegbar und vom Beladefahrzeug (1) aus steuerbar ist.

## Beschreibung

Die Erfindung betrifft ein Futtermischwagen-Steuerungssystem zum Betrieb eines Futtermischwagens.

Landwirtschaftliche Futtermischwagen werden üblicherweise verwendet, um Futtermittel wie Silage, Heu, Mais, Kraftfutter etc. zu mischen und zum Fütterungsort zu transportieren. Das Mischen erfolgt insbesondere mittels einer oder mehrerer Mischschnecken, die im Inneren des Mischbehälters angeordnet sind. Soll das fertig gemischte Futter am Fütterungsort ausgegeben werden, wird der Verschlussschieber geöffnet, so dass das Futter durch die Drehbewegung der Mischschnecke(n) durch die Ausgabeöffnung hindurch gefördert wird und aus dem Mischbehälter austreten kann.

Es sind selbstfahrende Futtermischwagen mit eigenem Antriebsmotor und gezogene Futtermischwagen bekannt, die an ein Zugfahrzeug, üblicherweise einen Traktor, angehängt und über die Zapfwelle des Traktors angetrieben werden. Während selbstfahrende Futtermischwagen in der Regel über eine Entnahmefräse zur selbständigen Befüllung mit Futtermittel ausgestattet sind, werden gezogene Futtermischwagen üblicherweise vom Zugfahrzeug zur Befüllstelle gezogen und dort entweder mittels des Zugfahrzeugs oder mittels eines zusätzlichen Beladefahrzeugs beladen. Wenn das Zugfahrzeug auch das Beladefahrzeug, beispielsweise ein Traktor mit Frontlader, ist, ist es erforderlich, dass der Futtermischwagen vom Zugfahrzeug abgehängt und nach dem Beladevorgang wieder an das Zugfahrzeug angehängt wird. Hierzu muss der Fahrer vom Zugfahrzeug absteigen und den Ab- bzw. Ankupplungsvorgang vornehmen. Dies ist unkomfortabel und mit zusätzlichem Zeitaufwand verbunden. Soll der Ab- bzw. Ankupplungsvorgang und das damit verbundene Ab- und Aufsteigen vom bzw. auf das Beladefahrzeug vermieden werden, muss zusätzlich zum Zugfahrzeug ein separates Beladefahrzeug zur Verfügung stehen, was häufig nicht der Fall ist.

Der Erfindung liegt daher die Aufgabe zugrunde, ein Futtermischwagen-Steuerungssystem zu schaffen, das einen möglichst einfachen und ökonomischen Betrieb eines Futtermischwagens ermöglicht, wenn dieser von einem separaten Beladefahrzeug befüllt werden soll.

Diese Aufgabe wird erfindungsgemäß durch ein Futtermischwagen-Steuerungssystem mit den Merkmalen des Anspruchs 1 gelöst. Vorteilhafte Ausführungsformen der Erfindung sind in den weiteren Ansprüchen beschrieben.

Das erfindungsgemäße Futtermischwagen-Steuerungssystem umfasst eine Fernsteuerung zum ferngesteuerten Betrieb des Futtermischwagens mit einem an einem Beladefahrzeug anordenbaren oder angeordneten Sender zum Senden von Funksignalen und einem am Futtermischwagen angeordneten Empfänger zum Empfang der Funksignale, wobei die Fernsteuerung derart ausgebildet ist, dass der Futtermischwagen getrennt vom Beladefahrzeug bewegbar und vom Beladefahrzeug aus steuerbar ist.

Das erfindungsgemäße Futtermischwagen-Steuerungssystem ermöglicht einen sehr einfachen und ökonomischen Betrieb eines Futtermischwagens, da der Futtermischwagen vom Fahrer des Beladefahrzeugs ferngesteuert, ohne mechanische Verbindung zum Beladefahrzeug oder einem anderen Zugfahrzeug, zur Beladestation navigiert werden kann. Dort kann der Fahrer des Beladefahrzeugs sofort mit dem Befüllen des Futtermischwagens mit Futtermittel beginnen, ohne den Futtermischwagen zunächst vom Beladefahrzeug abhängen zu müssen. Ferner kann der Fahrer des Beladefahrzeugs per Funk weitere Funktionen des Futtermischwagens in Gang setzen, insbesondere den Mischvorgang starten oder die Position von am Mischbehälter angeordneten Gegenschneiden verändern. Eine zweite Bedienungsperson für die Navigation und/oder den Betrieb des Futtermischwagens ist somit nicht erforderlich.

Das erfindungsgemäße Futtermischwagen-Steuerungssystem eignet sich somit insbesondere für Futtermischwagen, die über einen eigenen Antrieb zum Bewegen des Futtermischwagens und zum Antreiben der Mischschnecken verfügen, wobei es jedoch nicht erforderlich ist, dass diese Futtermischwagen ein eigenes Beladesystem, beispielsweise in Form einer Entnahmefräse, aufweisen.

Weiterhin kann der Fahrer des Beladefahrzeugs den befüllten Futtermischwagen ferngesteuert zu weiteren Stellen bewegen, beispielsweise zu Futterausgabestellen, wo per Funk ein am Mischbehälter vorgesehener Schieber geöffnet und das fertig gemischte Futtermittel aus dem Mischbehälter ausgebracht werden kann.

Besonders vorteilhaft ist, wenn das Futtermischwagen-Steuerungssystem eine Folgesensorik aufweist, die derart ausgebildet ist, dass der Futtermischwagen dem Beladefahrzeug gemäß einer programmierten Vorschrift folgen kann. Eine derartige Folgesensorik umfasst am Beladefahrzeug und am Futtermischwagen angeordnete Sensoren zur Positionsbestimmung des Beladefahrzeugs und des Futtermischwagens und eine Steuerung, die vorzugsweise derart ausgebildet ist, dass der Futtermischwagen in einem bestimmten Abstand dem Beladefahrzeug folgt. Mit Hilfe der Fernsteuerung kann der Fahrer des Beladefahrzeugs die Folgesensorik aktivieren, d.h. den Futtermischwagen starten und derart in Bewegung setzen, dass er dem Beladefahrzeug in einem bestimmten Abstand folgt. Eine derartige Folgesensorik stellt damit eine "elektronische Deichsel" ohne mechanische Verbindung zwischen Futtermischwagen und Beladefahrzeug dar. Dem Futtermischwagen kann per Funk der Befehl erteilt werden, dem Beladefahrzeug bis zu einer bestimmten, vorher einprogrammierten Stelle zu folgen und dann stehen zu bleiben, oder der Fahrer des Beladefahrzeugs kann per Funk den Befehl zum Anhalten und "Abkoppeln" des Futtermischwagens vom Beladefahrzeug an einer beliebigen Stelle übermitteln, um dann das Beladefahrzeug unabhängig vom Futtermischwagen zu bewegen.

Vorteilhafterweise umfasst die Folgesensorik einen am Futtermischwagen angeordneten Laserscanner oder eine Kamera zur Positionserfassung des Beladefahrzeugs und Navigation des Futtermischwagens.

Gemäß einer vorteilhaften Ausführungsform umfasst das Futtermischwagen-Steuerungssystem im Boden verlegte oder oberirdisch stationär installierte Sensoren zur Navigation des Futtermischwagens. Mit Hilfe derartiger Sensoren kann der Futtermischwagen auf einfache Weise längs bestimmter Fahrstrecken und zu bestimmten Zielpunkten bewegt werden.

Alternativ oder zusätzlich ist es auch möglich, dass das Futtermischwagen-Steuerungssystem ein GPS-System zur Navigation des Futtermischwagens umfasst. Besonders vorteilhaft ist es dabei, wenn das GPS-System als differentielles GPS-System (DGPS) ausgebildet ist, das einen am Beladefahrzeug angeordneten ersten DGPS-Empfänger und einen am Futtermischwagen angeordneten zweiten DGPS-Empfänger umfasst. Ein derartiges DGPS-System steigert durch Ausstrahlen von Korrekturdaten, die von ortsfesten Referenzstationen in Form von Antennen gewonnen werden, erheblich die Genauigkeit der Positionsbestimmung durch das Satelliten-gestützte globale Positionierungssystem GPS.

Die Erfindung wird nachfolgend beispielhaft anhand der Zeichnungen beispielhaft näher erläutert. Diese zeigen:
- Figur 1:: eine schematische Darstellung eines Beladefahrzeugs und eines Futtermischwagens, die mit dem erfindungsgemäßen Futtermischwagen-Steuerungssystem ausgestattet sind; und
- Figur 2:: eine schematische Darstellung von teils wesentlichen und teils optionalen Komponenten des erfindungsgemäßen Futtermischwagen-Steuerungssystems.

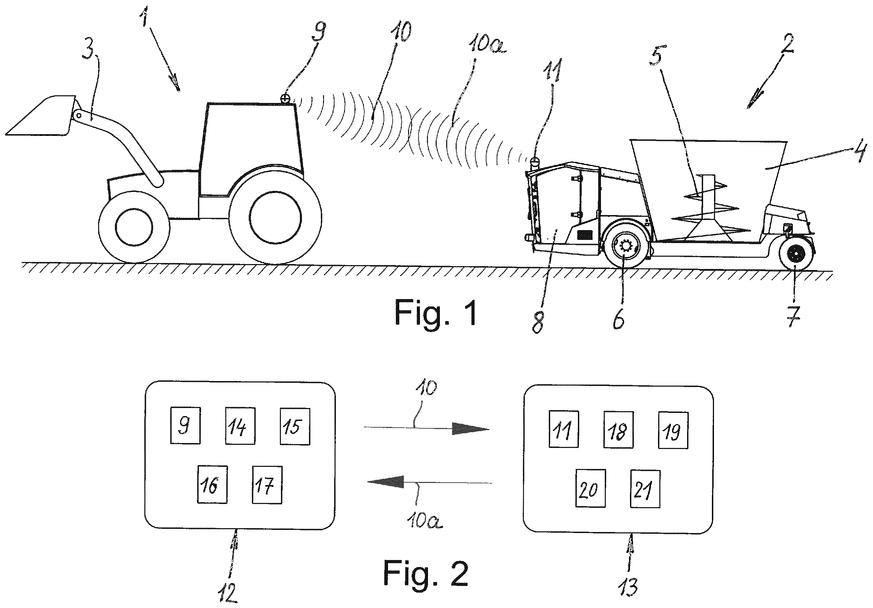

Figur 1 zeigt in schematischer Weise ein Beladefahrzeug und einen Futtermischwagen mit erfindungsgemäßem Futtermischwagen-Steuerungssystem.

In Figur 1 sind ein Beladefahrzeug 1 und ein Futtermischwagen 2 dargestellt. Beim Beladefahrzeug 1 handelt es sich im dargestellten Ausführungsbeispiel um einen Traktor mit einer Beladevorrichtung in Form eines Frontladers 3. Alternative Beladefahrzeuge sind ohne weiteres möglich.

Der Futtermischwagen 2 umfasst einen Mischbehälter 4, der nach oben hin offen ist, so dass Futtermittel von oben her in den Mischbehälter 4 eingefüllt werden kann. Innerhalb des Mischbehälters 4 befindet sich ein Mischwerkzeug in Form einer Mischschnecke 5, die um eine vertikale Achse drehbar ist. Der Mischbehälter 4 ist auf einem Fahrwerk mit Rädern 6, 7 montiert. Weiterhin umfasst der Futtermischwagen 2 einen Antriebsmotor, beispielsweise einen Verbrennungsmotor, elektrischen oder hydraulischen Motor, zum Antrieb der Mischschnecke 5, der Räder 6 und gegebenenfalls der weiteren Elemente des Futtermischwagen 2, beispielsweise von motorisch betätigbaren Elementen wie Entnahmeschieber, Gegenschneiden, Austrags-Querförderband oder einer Förderschnecke, die einen nicht dargestellten Mineraleinfülltrichter mit dem Inneren des Mischbehälters 4 verbindet.

Aufgrund des Antriebsmotors ist der Futtermischwagen 2 selbständig, d.h. ohne an das Beladefahrzeug 1 oder ein andere Zugfahrzeug angehängt zu werden, bewegbar und betreibbar.

Der Futtermischwagen 2 ist derart ausgebildet, dass er ferngesteuert, d.h. über Funk, navigiert und betrieben werden kann. Zweckmäßigerweise weist jedoch auch der Futtermischwagen 2 die zum Betrieb des Futtermischwagens 2 erforderlichen Bedienelemente und Einrichtungen auf, um diesen gegebenenfalls auch direkt vom Futtermischwagen 2 aus manuell steuern zu können. Hierzu kann der Futtermischwagen 2, wie dargestellt, ein Fahrerhaus bzw. einen Fahrerstand 8 aufweisen, in dem diese Bedienungselemente angeordnet sind.

Der Futtermischwagen 2 ist mittels eines Futtermischwagen-Steuerungssystems navigier- und betreibbar, das eine Fernsteuerung zum ferngesteuerten Betrieb des Futtermischwagens 2 mit einem am Beladefahrzeug 1 angeordneten, insbesondere fest installierten, Sender 9 zum Aussenden von Funksignalen und einem am Futtermischwagen 2 angeordneten Empfänger 10 zum Empfang der Funksignale umfasst.

Die in Figur 2 schematisch dargestellte Fernsteuerung ist derart ausgebildet, dass der Futtermischwagen 2 vom Beladefahrzeug 1 aus steuerbar ist. Hierzu weist das Futtermischwagen-Steuerungssystem eine erste, am Beladefahrzeug 1 angeordnete Steuereinrichtung 12 auf, die insbesondere den Sender 9, einen Empfänger 14, eine Tastatur 15 zur Eingabe von Steuerungsbefehlen, eine Anzeigeeinheit 16 zur Anzeige von Steuerbefehlen und/oder Funktionen des Futtermittelwagens 2 und Sensoren 17 zur Positionsbestimmung des Beladefahrzeugs 1 und des Abstands zum Futtermischwagen 2 enthalten kann. Die erste Steuereinrichtung 12 kann auch ein mobiles Gerät, beispielsweise ein Smartphone, sein.

Die zweite Steuereinrichtung 13, die am Futtermischwagen 2 angeordnet ist, umfasst zweckmäßigerweise einen Sender 18, den Empfänger 11, eine Tastatur 19, zur Eingabe von Steuerungsbefehlen, eine Anzeigeeinheit 20 zur Anzeige von Steuerbefehlen und/oder Funktionen des Futtermischwagens 2, sowie Sensoren 21 zur Positionsbestimmung des Futtermischwagens 2 sowie zur Abstandsbestimmung zum Beladefahrzeug 1.

Die beiden Steuereinrichtungen 12, 13 kommunizieren über Funksignale 10, 10a derart miteinander, dass der Futtermischwagen 2 die vom Fahrer des Beladefahrzeugs 1 oder von einer anderen Bedienperson eingegebenen Befehle zur Navigation und den Betrieb des Futtermischwagens 2 ferngesteuert und getrennt vom Beladefahrzeug 1 ausführen kann.

Mit Hilfe des erfindungsgemäßen Futtermischwagen-Steuerungssystems ist der Futtermischwagen 2 in unterschiedlichster Weise ferngesteuert betreibbar.

Gemäß einem ersten Ausführungsbeispiel nähert sich der Fahrer des Beladefahrzeugs 1 dem Futtermischwagen 2 so weit, bis ein gewünschter Abstand erreicht ist. Über die erste Steuereinrichtung 12 stellt der Fahrer dann eine Funkverbindung mit dem Futtermischwagen 2 her, um eine elektronische Folgefunktion zu starten. Der Futtermischwagen 2 folgt dann mittels der Sensoren 17, 21 dem Beladefahrzeug 1 zu den Beladestellen, ohne dass der Futtermischwagen 2 mittels einer Deichsel mechanisch an ein Zugfahrzeug, insbesondere an das Beladefahrzeug 1, angekuppelt werden müsste. Hat der Futtermischwagen 2 die gewünschte Beladestelle erreicht, wird der Futtermischwagen 2 angehalten und die Folgefunktion beendet. Der Fahrer kann nun mit Hilfe des Beladefahrzeugs 1 den Futtermischwagen 2 in der gewünschten Weise mit Futtermittel befüllen. Weiterhin kann der Fahrer vom Beladefahrzeug 1 aus ferngesteuert den Futtermischwagen 2 anweisen, den Mischvorgang zu starten. Nach Beendigung des Füllvorgangs kann der Futtermischwagen 2 entweder mittels des Beladefahrzeugs 1 und der Folgesensorik zu einer anderen gewünschten Stelle, beispielsweise zu einer Futterentladestelle, navigiert oder über die Fernsteuerung angewiesen werden, selbständig bestimmte, einprogrammierte Positionen auf dem Hof anzufahren.

Gemäß einem zweiten Ausführungsbeispiel gibt der Fahrer des Beladefahrzeugs 1 dem Futtermischwagen 2 ferngesteuert den Befehl, selbständig, d.h. unabhängig vom Beladefahrzeug 1, von der momentanen Position zu einer anderen, zweiten Position, beispielsweise zur Befüllstelle, zu fahren. Der Futtermischwagen 2 orientiert sich dabei an im Boden verlegte oder oberirdisch stationierte Sensoren oder wird mittels eines GPS-Systems, insbesondere über ein differentielles GPS-System, navigiert.

Ein drittes Ausführungsbeispiel besteht darin, dass das Futtermischwagen-Steuerungssystem derart ausgebildet ist, dass eine Bedienperson über die Fernsteuerung den Futtermischwagen 2 manuell navigieren und in die jeweiligen Betriebszustände schalten kann.

Weiterhin ist es auch möglich, die vorstehenden Ausführungsbeispiele zum Betrieb des Futtermischwagens 2 miteinander zu kombinieren und/oder durch weitere automatische Zusatzfunktionen zu ergänzen, beispielsweise dass das Anfahren bestimmter Be- und Entladestellen von einem Wiegerezept abhängig gemacht wird, d.h. dass bei Erreichen eines bestimmten Füllgewichts eine weitere Beladestelle bzw. Entladestelle automatisch angefahren wird.

## Patentansprüche

1. Futtermischwagen-Steuerungssystem zum Betrieb eines Futtermischwagen (2), **gekennzeichnet durch** eine Fernsteuerung zum ferngesteuerten Betrieb des Futtermischwagens (2) mit einem an einem Beladefahrzeug (1) anordenbaren oder angeordneten Sender (9) zum Aussenden von Funksignalen (10) und einem am Futtermischwagen (2) angeordneten Empfänger (11) zum Empfang der Funksignale (10), wobei die Fernsteuerung derart ausgebildet ist, dass der Futtermischwagen (2) getrennt vom Beladefahrzeug (1) bewegbar und vom Beladefahrzeug (1) aus steuerbar ist.

2. Futtermischwagen-Steuerungssystem nach Anspruch 1, **dadurch gekennzeichnet, dass** das Futtermischwagen-Steuerungssystem eine Folgesensorik aufweist, die derart ausgebildet ist, dass der Futtermischwagen (2) dem Beladefahrzeug (1) gemäß einer programmierten Vorschrift folgen kann.

3. Futtermischwagen-Steuerungssystem nach Anspruch 2, **dadurch gekennzeichnet, dass** die Folgesensorik einen am Futtermischwagen (2) angeordneten Laserscanner oder eine Kamera zur Positionserfassung des Beladefahrzeugs (1) und Navigation des Futtermischwagens (2) umfasst.

4. Futtermischwagen-Steuerungssystem nach einem der vorhergehenden Ansprüche, **dadurch gekennzeichnet, dass** das Futtermischwagen-Steuerungssystem im Boden verlegte oder oberirdisch stationär installierte Sensoren zur Navigation des Futtermischwagens (2) umfasst.

5. Futtermischwagen-Steuerungssystem nach einem der vorhergehenden Ansprüche, **dadurch gekennzeichnet, dass** das Futtermischwagen-Steuerungssystem ein GPS-System zur Navigation des Futtermischwagens (2) umfasst.

6. Futtermischwagen-Steuerungssystem nach Anspruch 5, **dadurch gekennzeichnet, dass** das GPS-System als differentielles GPS-System (DGPS) ausgebildet ist, das einen am Beladefahrzeug (1) angeordneten ersten DGPS-Empfänger und einen am Futtermischwagen (2) angeordneten zweiten DGPS-Empfänger umfasst.
